# FASCICULE DE BREVET EUROPEEN

(11) **EP 2 561 468 B1**
(45) Date de publication et mention de la délivrance du brevet: **01.04.2015**
(21) Numéro de dépôt: 11716243.8
(22) Date de dépôt: 21.04.2011
(51) Int. Cl.: G06K 17/00, G07C 9/00

(54) **CLE D'ACCES A UN VEHICULE AUTOMOBILE A CAPACITE D'ECHANGE EN COMMUNICATION CHAMPS PROCHE**
ZUGANGSSCHLÜSSEL EINES KRAFTFAHRZEUGES MIT VERBESSERTER AUSTAUSCHFÀHIGKEIT MIT NAHFELDKOMMUNIKATION
ACCESS KEY FOR A MOTOR VEHICLE WITH ENHANCED EXCHANGE CAPABILITY WITH NEAR FEALD COMMUNICATION

(30) Priorité: 23.04.2010 FR 1001761
(43) Date de publication de la demande: 27.02.2013
(73) Titulaire: Valeo Comfort and Driving Assistance, 94046 Créteil Cedex (FR)
(72) Inventeur: MENARD, Eric, F-94046 Créteil (FR); LECONTE, Eric, F-94046 Créteil (FR)
(74) Mandataire: Larger, Solène
(86) Numéro de dépôt international: PCT/EP2011/056405
(87) Numéro de publication internationale: WO 2011/131750

(56) Documents cités:
- DE-A1-102008 004 111
- US-A1- 2006 219 776

## Description

L'invention concerne les clés de déverrouillage d'accès et/ou d'autorisation de démarrage de véhicule automobile, et en particulier les clés permettant de réaliser le déverrouillage du véhicule, par pression sur un bouton de la clé, par échange bidirectionnel sous forme de question-réponse avec le véhicule, ou encore par simple rapprochement d'un lecteur du véhicule et échange question-réponse en champs proche ou NFC avec le lecteur du véhicule.

L'invention concerne également l'utilisation de telles clés pour un communication en champ proche dans une application additionnelle au déverrouillage ou à l'autorisation de démarrage. La communication en champs proche, usuellement appelée NFC, pour Near Field Communication, utilise un protocole d'échanges de données basé sur des radiofréquences de très courte portée. Il s'agit d'une extension des techniques de radio-identification qui, tout en se basant sur la norme ISO/IEC 14443, permet la communication entre périphériques en mode pair à pair. Le protocole NFC est basé sur un couplage inductif et une modulation de charge au niveau d'un appareil esclave.

Au contraire d'autres techniques de radio-identification ou du bluetooth dont la portée est d'une dizaine de mètres, la technique NFC est utilisable sur de très courtes distances, quelques centimètres. Elle suppose une démarche volontaire de l'utilisateur et ne peut donc normalement pas être utilisée à son insu, ce qui apporte une garantie de sécurité pour des transaction sensibles comme une opération bancaire ou le déverrouillage d'un véhicule.

La technologie NFC est actuellement développée par un consortium industriel regroupé sous le nom de Forum NFC. La technologie NFC est dérivée de la technologie RFID (Radio Frequency Identification) et utilise des composants ou processeurs NFC présentant plusieurs modes de fonctionnement, notamment un mode lecteur et un mode émulation de carte.

En mode lecteur, un processeur NFC fonctionne comme un lecteur RFID conventionnel pour accéder en lecture ou écriture à une puce RFID. Le processeur NFC émet un champ magnétique, envoie des données par modulation de l'amplitude du champ magnétique et reçoit des données par modulation de charge et couplage inductif. Ce mode est également qualifié de mode actif car le processeur NFC émet un champ magnétique dans ce mode.

Dans le mode émulation, un processeur NFC fonctionne de façon passive à la manière d'un transpondeur pour dialoguer avec un autre lecteur et être vu par l'autre lecteur comme une puce RFID. Le processeur n'émet pas de champ magnétique, reçoit des données en démodulant un champ magnétique émis par l'autre lecteur et émet des données par modulation de l'impédance de son circuit d'antenne (modulation de charge). Ce mode est également qualifié de mode passif, car le processeur NFC n'émet pas de champ magnétique dans ce mode.

D'autres modes de communication peuvent être mis en oeuvre, notamment un mode dit "device" où un composant doit s'apparier avec un autre processeur NFC se trouvant dans le même mode de fonctionnement, chaque processeur NFC se place alternativement dans un état passif (sans émission de champ) pour recevoir des données et dans un état actif (avec émission de champ) pour émettre des données.

Dans ces trois modes de fonctionnement, un processeur NFC peut mettre en oeuvre plusieurs protocoles de communication sans contact par exemple ISO 14443-A, ISO 14443-B ou ISO 15693. Chaque protocole définit une fréquence d'émission du champ magnétique, une méthode de modulation de l'amplitude du champ magnétique pour émettre des données en mode actif, et une méthode de modulation de charge par couplage inductif pour émettre des données en mode passif.

Un certain nombre de normes définissent le protocle NFC :
- NFCIP-1 (ISO/IEC 18092) définit l'interface et le protocole de communication entre deux périphériques NFC;
- ISO/IEC 14443-1 à ISO/IEC 14443-4 définissent la communication avec des circuits intégrés sans contact;
- NDEF (NFC Data Exchange Format) définit le format d'échange logique des données.

La communication NFC présente généralement les caractéristiques suivantes :
- Débits de communication : 106, 212, 424 ou 848 kbit/s ;
- Gamme de fréquence : 13,56 MHz ;
- Distance de communication : environ 10 cm ;
- Mode de communication : half-duplex ou full-duplex ;

Le document US 2006/0219776 décrit une clé de déverrouillage selon le préambule de la revendication 1.

Le document intitulé « Schlüsselerlebnis » et publié le 16 avril 2010 par Tobias Schöllermann et Thomas Kratz sur le site internet www.elektroniknet.de propose d'intégrer de nouvelles fonctionnalités dans une clé de déverrouillage de véhicule munie d'une interface de communication NFC. La clé proposée intègre un circuit électronique disposant d'un accès à l'interface de communication NFC. Cet circuit électronique présente une mémoire lui permettant de stocker un certain nombre d'informations fournies par le véhicule durant son utilisation, par exemple la date de la prochaine révision, la date du prochain contrôle technique du véhicule, la quantité de carburant restante, l'emplacement du véhicule ou encore son état de fonctionnement. Ces informations peuvent ainsi utilement être consultées même lorsque l'utilisateur a quitté le véhicule. Le circuit électronique fournit un certain nombre d'autres applications à la clé. La clé est notamment utilisée pour authentifier l'utilisateur et mémoriser des titres de transport électronique, mémoriser des points de fidélité, procéder à un paiement d'achat ou enregistrer des droits d'utilisation de différents véhicules. Le circuit électronique de la clé peut notamment permettre de réaliser des réservations en authentifiant l'utilisateur, depuis un système de télécommunication intégrée dans le véhicule.

Le circuit électronique de commande de la clé est encapsulé à l'intérieur d'un boîtier de protection étanche. Outre la protection du circuit électronique contre les agressions extérieures, un tel boîtier ainsi que l'intégration du circuit électronique évitent également une manipulation de celui-ci par un utilisateur indélicat souhaitant en faire une utilisation frauduleuse à l'insu du propriétaire.

Une telle clé présente cependant en pratique un certain nombre d'inconvénients. Dans le cadre de la revente d'un véhicule, les clés d'accès aux véhicules sont transférées au nouveau propriétaire. Le circuit électronique présent dans la clé mémorise potentiellement des données personnelles particulièrement sensibles relatives à l'utilisateur. Le circuit électronique mémorise notamment des clés secrètes de chiffrement, telles que les données bancaires ou un certain nombre de données personnelles qu'il est souhaitable de ne pas fournir au nouveau propriétaire. Lors de la cession du véhicule, il est donc indispensable pour l'ancien propriétaire de procéder à la réinitialisation de la ou des clé(s) secrète(s) en passant par son concessionnaire ou à la génération de nouvelles clés secrètes. Cette opération peut constituer une démarche fastidieuse et longue, et ne pas présenter une garantie suffisante d'effacement pour l'ancien propriétaire. Par ailleurs, une utilisation massive d'une telle clé de véhicule pour une flotte de véhicules de location s'avère en pratique impossible. En effet, la réinitialisation ou le renouvellement d'une clé secrète à chaque changement d'utilisateur s'avérerait fastidieuse et rendrait l'utilisation d'une telle clé de véhicule inopérante, les données collectées par le circuit électronique pour un utilisateur devenant inutilisables sans de lourdes manipulations lors de la restitution du véhicule.

L'invention vise à résoudre un ou plusieurs de ces inconvénients grâce à une clé de déverrouillage (1) d'accès à un véhicule automobile, selon la revendication 1.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en coupe de dessus d'un premier mode de réalisation d'une clé selon invention ;
- la figure 2 est une vue en coupe de dessous de la clé de la figure 1 ;
- la figure 3 est une vue en coupe de face de la clé de la figure 1 ;
- la figure 4 est une vue en coupe de dessus d'un logement d'une clé selon un deuxième mode de réalisation ;
- la figure 5 est une vue de dessus d'une clé selon un troisième mode de réalisation, dont le logement de batterie est ouvert ;
- la figure 6 est une vue en coupe de côté de la clé de la figure 5.

L'invention propose une clé de déverrouillage d'accès à un véhicule automobile. Une telle clé, également désignée par le terme d'élément d'identification électronique, dispose d'une antenne et d'un circuit de contrôle de la clé pour réaliser une transaction de déverrouillage avec un véhicule, connus en soi. La clé présente un logement pour recevoir un support amovible contenant des données et une interface de lecture/écriture dans un tel support présent dans le logement. La clé comporte en outre une interface de communication NFC connectée à l'interface de lecture/écriture pour permettre un échange de données entre l'interface de communication NFC et l'interface de lecture/écriture.

Ainsi, la clé permet la mise en oeuvre d'un grand nombre d'applications distinctes, sans avoir à se soucier de la réinitialisation de la clé lors de son transfert. Un utilisateur peut conserver ses données personnelles lorsqu'il change de véhicule et dispose de garanties de non-conservation de ses données personnelles par un tiers lorsqu'il lui transfère la clé alors dépourvue du support amovible.

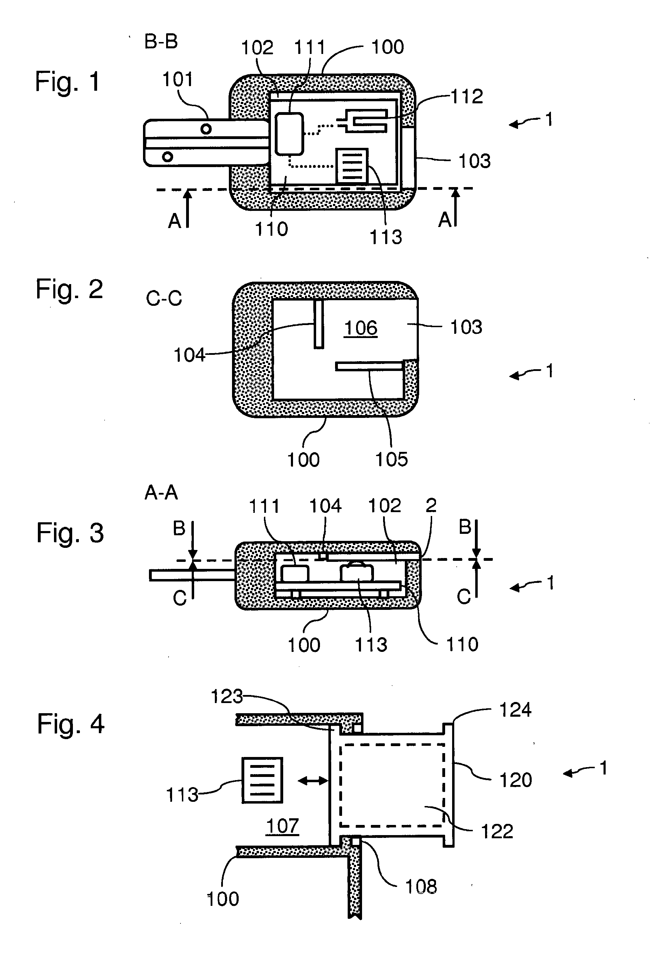

Les figures 1 à 3 représentent des vues en coupe d'un premier mode de réalisation d'une clé 1 selon l'invention. La clé 1 comprend une coque 100 dans laquelle une cavité 102 est ménagée. La cavité 102 est ménagée entre deux demi-coques emboîtées. Une clé mécanique 101 forme une protubérance par rapport à la coque 100. La clé mécanique 101 présente un motif de déverrouillage unique associée à une serrure du véhicule. La cavité 102 loge de façon connue en soi un substrat 110 destiné à recevoir des composants électroniques et comportant des pistes électriques les reliant. Une antenne 112 associée éventuellement à un circuit d'excitation connus en soi sont logés dans la cavité 102. L'antenne 112 est par exemple fixée sur le substrat 110. L'antenne 112 et son circuit d'excitation forment une interface de communication, par exemple radiofréquence, configurée pour communiquer selon un protocole NFC.

Un circuit de contrôle 111, par exemple réalisé sous forme de microcontrôleur, est fixé sur le substrat 111. Le circuit de contrôle 111 est connecté à l'antenne 112, de façon à pouvoir communiquer selon le protocole NFC. Le circuit de contrôle 111 comprend une mémoire contenant des données d'authentification d'accès et/ou de démarrage de la clé, basées sur un identifiant unique de la clé. Le circuit de contrôle 111 est apte à recevoir une requête d'authentification et à y répondre par l'intermédiaire d'une seconde antenne non représentée mais connue en soi, de façon à réaliser une transaction de déverrouillage et/ou d'autorisation de démarrage avec un véhicule. Le circuit de contrôle 111 peut réaliser de façon connue en soi une telle transaction sur la base des données d'authentification contenues dans sa mémoire.

La clé 1 forme ainsi de façon connue en soi un identifiant électronique de l'utilisateur, permettant son authentification pour permettre le déverrouillage des ouvrants du véhicule, un accès à l'habitacle du véhicule et la désactivation d'un système antidémarrage. Une fois qu'il a accédé à l'habitacle du véhicule, l'utilisateur peut notamment dans un mode de réalisation disposer la clé 1 dans une fente d'un lecteur monté dans le véhicule, typiquement ménagée au niveau de la planche de bord et communiquant avec la clé par échange basses-fréquences. L'introduction de la clé 1 dans cette fente permet d'assurer la désactivation de l'anti-démarrage du véhicule. Le démarrage du moteur peut par exemple être initié par appui sur un bouton disposé sur la planche de bord.

Le verrouillage du véhicule peut être réalisé automatiquement lorsque l'utilisateur s'éloigne du véhicule, par pression sur un bouton de la clé 1, induisant l'émission d'une commande de fermeture à destination d'un récepteur du véhicule typiquement en radio-fréquences ou encore par échange bidirectionnel avec la clé suite à une commande de vérrouillage par exemple par contact manuel sur une zone spécifique d'une poignée de porte de véhicule. Le déverrouillage du véhicule peut bien entendu également être réalisé ainsi au moyen de la clé mécanique 101.

Une interface de lecture/écriture 113 est fixée sur le substrat 110. L'interface de lecture/écriture 113 est connectée électriquement au circuit de contrôle 111. L'interface de lecture/écriture 113 est disposée à l'aplomb d'un logement 106 de réception d'un support amovible. Le logement 106 est ménagé à l'intérieur de la cavité 102. Un support amovible 2 placé dans le logement 106 est illustrée uniquement à la figure 3. L'interface 113 présente des plots de contact en saillie dans le logement 106 pour venir au contact des contacts de surface correspondants du support amovible 2.

Le circuit de contrôle 111 est configuré pour permettre un échange de données entre l'antenne 112 et l'interface 113. Ainsi, une transaction peut être réalisée entre un terminal externe muni d'une interface NFC et le support amovible 2 mémorisant des données appropriées. La transaction peut notamment comprendre la lecture d'informations dans le support amovible 2, et/ou la mise à jour ou l'écriture d'information dans le support 2. Le support amovible de données 2 est dans un mode réalisation, configuré pour gérer les autorisations d'accès aux données que ce support 2 contient lui-même, par exemple sous la forme d'un accès nécessitant la saisie et la vérification par le support amovible lui-même d'un code PIN - Personal Identification Number - d'utilisateur.

Un certain nombre de transactions avec un terminal associé peuvent ainsi être mises en oeuvre par l'intermédiaire de la clé 1, en fonction des propriétés du support 2. La transaction par le protocole NFC avec le support 2 est par exemple une mise à jour dans la mémoire du support 2, à la hausse ou à la baisse, des points de fidélité lors d'un achat, une mémorisation des paramètres de fonctionnement du véhicule durant son utilisation, une fixation ou une décrémentation d'un droit à délivrance de carburant autorisé, une mémorisation ou la consommation de billets de transport ou d'entrée à une installation de services, une mémorisation ou l'utilisation d'un droit d'accès à un bâtiment, une transaction de type porte-monnaie électronique c'est-à-dire le rechargement ou la consommation d'une valeur pécuniaire stockée localement dans la clé ou encore l'utilisation d'une clé bancaire secrète pour une transaction bancaire. Dans ce dernier cas, et de manière connue en soi, l'écriture dans le support amovible consiste en l'écriture d'un chiffre aléatoire délivré par un serveur à distance et transmis ici à la clé via NFC, et la lecture en une lecture d'un résultat obtenu par application d'une clé secrète préservée dans le support amovible et mise en oeuvre à l'aide d'un algorithme stocké et executé dans le support amovible lui-même.

Plus généralement le support amovible contient donc des données correspondant à des droits à un prestation, par exemple une prestation de paiement, et ces données sont par exemple une clé secrète donnant lieu à authentification auprès d'une entité délivrant la prestation, ou un montant sous la forme d'une valeur numérique correspondant à une certaine quantité autorisée d'une telle prestation.

La transaction consiste donc avantageusement en l'exercice ou la modification de ces droits à prestation par utilisation des données stockées dans le support amovible. Ce droit peut être matérialisé par une clé bancaire secrète donnant accès au débit d'un compte bancaire à distance, ce droit peut être un montant stocké localement dans le support amovible par exemple dans le cas de l'exercice de points de fidélité. Ce droit peut également être matérialisé par un montant indiquant une quantité de carburant pouvant être prélevée sur une durée donnée, dans le cas d'un véhicule de société.

Dans un mode de réalisation particulier, la clé de déverrouillage du véhicule comporte une fente de réception pour un support amovible qui est une carte bancaire au format carte de visite, la carte bancaire dépassant alors de la clé de déverrouillage lorsqu'elle est positionnée dans la fente.

Dans le cas de l'utilisation d'un véhicule électrique, une telle clé de déverrouillage est approchée d'une borne électrique de rechargement afin de réaliser un échange NFC entre la clé et la borne. Dans cet échange, un paiement est effectué à l'aide de la carte bancaire, et un droit à une certaine quantité d'énergie électrique est stocké sur la clé. Dans ce mode de réalisation, le droit à une certaine quantité d'énergie électrique est stocké dans une mémoire fixe de la clé, de sorte la clé est ensuite effectuée pour obtenir par liaison NFC une certaine quantité d'électricité auprès de la borne, sans nécessité de maintenir la carte bancaire en place dans la clé de déverrouillage.

Dans ce cas, on utilise un support amovible sous la forme d'une carte bancaire pour une transaction de paiement, donnant lieu à une transaction de rechargement de droits à une quantité d'énergie, cette fois dans une mémoire fixe de la clé, le rechargement étant en variante dans un support amovible additionnel de la clé tel qu'une carte mémoire à faible niveau de sécurité.

Suivant le degré de sécurité nécessité par la transaction, le support 2 est un simple support de type EEPROM utilisé en lecture/écriture, ou une carte à puce intégrant un cryptosystème destiné à conditionner la transaction à une authentification préalable. Les applications permises par le support peuvent être rendues possibles ou supprimées au cours du cycle de vie du support, par exemple en stockant ou supprimant des applications logicielles, ou simplement en stockant une valeur numérique dans une zone mémoire protégée laquelle zone est dédiée préalablement à une nature particulière de service : porte-monnaie électronique, quantité d'essence, points de fidélité, etc..

L'accès d'un support 2 au logement 106 est fourni par une ouverture 103 ménagée dans une face de la coque 100. Une butée latérale 105 forme un rail de guidage guidant le support 2 en coulissement lors de son introduction à travers l'ouverture 103. Les surfaces périphériques de l'ouverture 103 permettent également de guider le support 2 en coulissement. Une butée axiale 104 limite la course de coulissement du support 2 lors de son introduction. Un rabat non illustré peut être monté sur la coque, de façon à obturer sélectivement l'ouverture 103 et permettre de conserver une protection contre la poussière et l'humidité à l'intérieur de la cavité 102.

Le logement 106 peut être conçu pour recevoir une carte à puce ou carte à microprocesseur 2, notamment selon la norme ISO 7816, intégrant des fonctions de chiffrement et d'authentification. Le logement 106 est avantageusement conçu pour loger une carte au format SIM - Subscriber Identification Module- ou microSIM. L'interface 113 pourra alors présenter des plots de connexion disposés conformément au standard ISO 7816-2. Le logement 106 peut également être conçu pour recevoir un support amovible, notamment dans des formats distribués commercialement sous les dénominations SD, Compactflash, Memory Stick, xD, MMC ou PCMCIA. De telles cartes mémoires disposent de contacts de surface pour communiquer par l'intermédiaire des plots de contact de l'interface 113.

Bien qu'une clé mécanique 101 ait été illustrée, l'invention s'applique également à une clé dépourvue de clé mécanique. La clé mécanique 101 illustrée est fixe par rapport à la coque 100. Cependant, on peut bien entendu réaliser une clé 1 munie d'une clé mécanique 101 escamotable dans la coque 100. La coque 100 peut présenter de façon connue au soi une surface externe conformée pour faciliter la préhension par utilisateur.

La figure 4 est une vue en coupe de dessus d'un mode de réalisation d'une clé 1 selon l'invention. Dans ce mode de réalisation, un tiroir 120 est monté coulissant dans une rainure 107 ménagée à l'intérieur de la coque 100. Le tiroir 120 présente des butées 123 permettant de définir sa position d'ouverture maximale. Les butées 123 permettent également de guider le tiroir 120 en coulissement dans la rainure 107. Le tiroir 120 présente une empreinte 122 destinée à recevoir le support amovible 2. L'empreinte 122 forme ainsi un logement pouvant être disposé à l'extérieur de la coque 100 pour faciliter l'introduction du support 2. Lorsque le tiroir 120 est coulissé vers l'intérieur de la coque 100, les contacts de surface du support disposé dans l'empreinte 122 viennent en contact avec les plots de contact de l'interface 113. Afin de favoriser l'étanchéité à l'intérieur de la coque 100, le tiroir 120 présente des excroissances 124 venant se loger dans des renfoncements 128 de la coque 100. Les excroissances 124 et les renfoncements 128 peuvent être configurés pour permettre à l'extrémité du tiroir 120 d'être affleurante avec la coque 100 en position fermée.

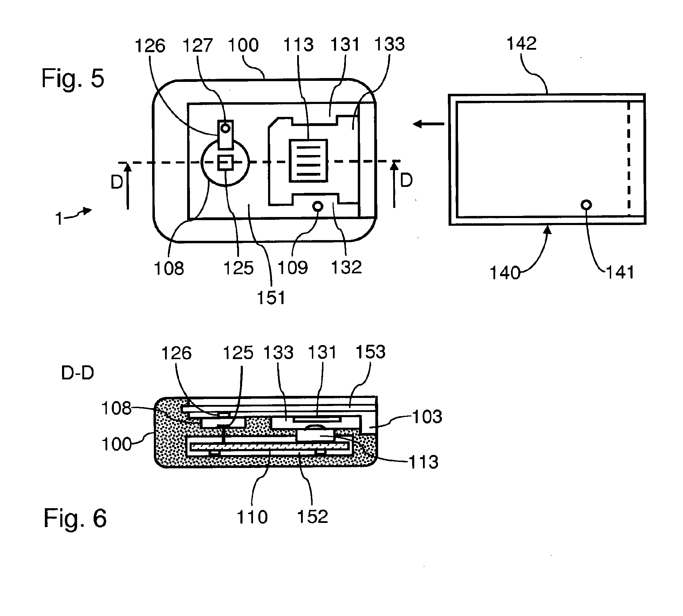

Les figures 5 et 6 représentent un troisième mode de réalisation d'une clé 1 selon l'invention. Dans ce mode de réalisation, un boîtier étanche 152 est ménagé à l'intérieur de la coque 100. Le boîtier étanche 152 loge le substrat 110, le circuit de contrôle (non illustré), l'antenne (non illustrée) et l'interface de lecture/écriture 113. Le boîtier étanche 152 peut être obtenu par la formation d'une paroi périphérique d'un seul tenant par moulage. Le boîtier étanche 152 peut ainsi définir une zone sèche, protégeant le circuit de contrôle 111 et le substrat 110 contre des agressions extérieures, notamment contre l'humidité ou la poussière.

Une cavité 151 ménagée dans la coque 100 est formée de façon séparée par rapport au boîtier étanche 152. Un réceptacle 108 est formé dans la cavité 151 pour recevoir une pile d'alimentation. Le réceptacle 108 présente un contact électrique 125 au niveau de sa paroi de fond. Un autre contact électrique 126 est monté pivotant par l'intermédiaire d'un axe 127 à l'aplomb du réceptacle 108, pour permettre l'introduction d'une pile dans le réceptacle 108. Les contacts électriques 125 et 126 sont destinés à venir en contact avec des pôles d'une pile ou batterie placée dans le réceptacle 108, pour assurer l'alimentation des circuits électroniques logés dans le boîtier 152.

Un logement 133 de réception d'un support amovible est également formé dans la cavité 151. Une ouverture 103 ménagée dans une face de la coque 100 permet l'introduction d'un support amovible dans le logement 133. L'interface 113 est disposée à l'aplomb du logement 133. Les plots de contact de l'interface 113 sont en saillie dans ce logement 133. L'étanchéité autour de l'interface 113 est assurée par tous moyens appropriés pour maintenir le boîtier 152 étanche par rapport à la cavité 151. Le logement 133 est surplombé par des ergots 131 et 132, permettant le guidage en coulissement du support amovible 2 lors de son introduction, ainsi que son maintien en position.

La clé 1 présente également un capot amovible 140. Le capot amovible 140 est configuré pour fournir sélectivement un accès à la cavité 151 ou isoler cette cavité de l'extérieur. Le capot 140 est par exemple retiré afin de changer la pile ou d'extraire ou d'introduire un support amovible dans le logement 133. Le capot 140 présente avantageusement un rebord 142 pouvant coulisser dans une rainure 153 ménagée dans la coque 100. Le capot 140 peut ainsi coulisser par rapport à la coque 100 jusqu'à une position dans laquelle il obture l'accès à la cavité 151. Le capot 140 peut être maintenu en position fermée au moyen d'une vis traversant un orifice 141 du capot 140 et vissée dans un alésage fileté 109 ménagé dans une paroi de la coque 100.

Le capot 140 et/ou la coque 100 peuvent être munis d'un joint d'étanchéité pour garantir l'étanchéité de la cavité 151 lorsque le capot 140 est en position fermée. Le joint peut par exemple être surmoulé ou collé sur le capot 140.

Bien qu'on ait décrit une interface 113 assurant une liaison par contact avec le support amovible, on peut également envisager que la clé soit apte à communiquer avec le support amovible par l'intermédiaire d'une interface de communication sans contact. La clé 1 et son antenne NFC peuvent alors être utilisées comme amplificateur des requêtes destinées au support amovible ou des réponses renvoyées par le support amovible.

## Revendications

1. Clé de déverrouillage (1) d'accès à un véhicule automobile, comprenant :
- une interface de communication (112) configurée pour communiquer selon un protocole NFC ;
- un support contenant des données constituant des droits de délivrance de prestation ;
- un circuit de contrôle (111) apte à traiter une transaction par l'intermédiaire de ladite interface de communication (112) sur la base desdites données constituant les droits de délivrance de prestation ;
- un logement de réception (106) d'un support contenant des données constituant des droits de délivrance de prestation de type amovible (2),
- une interface (113) de lecture et/ou écriture dans le support amovible placé dans le logement, le circuit de contrôle (111) étant configuré pour permettre un échange de données entre l'interface de communication et l'interface de lecture/écriture
- une coque (100) logeant le circuit de contrôle (111), coque dans laquelle ledit logement (106) est ménagé
**caractérisé en ce qu'**un boîtier étanche (152) est ménagé à l'intérieur de la coque (100), ledit boîtier étanche (152) logeant le circuit de contrôle.

2. Clé de déverrouillage selon la revendication 1, dans laquelle le logement est séparé d'une partie de boîtier contenant le circuit de contrôle, la coque comprenant un capot amovible configuré pour sélectivement fournir un accès audit logement ou isoler ledit logement de l'extérieur.

3. Clé de déverrouillage selon l'une quelconque des revendications précédentes, dans lequel un réceptacle (108) configuré pour recevoir une batterie est ménagé dans ledit logement, la clé comprenant deux plots de contact électrique (125, 126) configurés pour venir en contact avec deux pôles d'une batterie disposée dans le réceptacle, lesdits plots étant raccordés électriquement audit circuit de contrôle.

4. Clé de déverrouillage selon l'une quelconque des revendications précédentes, dans lequel le logement est ménagé dans un tiroir monté coulissant par rapport à la coque (100), de façon à pouvoir placer sélectivement le logement hors de la coque.

5. Clé de déverrouillage selon l'une quelconque des revendications précédentes, dans laquelle l'interface de lecture/écriture présente des plots de contact en saillie dans le logement, cette interface présentant une connexion électrique raccordant les plots de contact au circuit de contrôle.

6. Clé de déverrouillage selon l'une quelconque des revendications précédentes, dans laquelle ledit logement comprend au moins un rail de guidage (105,131,132) configuré pour guider un support amovible en coulissement à l'intérieur du logement.

7. Clé de déverrouillage selon l'une quelconque des revendications précédentes, **caractérisée en ce que** le support amovible (2) est une carte à microprocesseur

8. Clé de déverrouillage selon la revendication précédente, **caractérisé en ce que** le support amovible (2) est une carte à microprocesseur au format carte SIM.

9. Clé de déverrouillage selon l'une quelconque des revendications précédentes, **caractérisée en ce que** le logement du support amovible comprend une fente de réception d'une carte de paiement au format carte de visite.

## Patentansprüche

1. Entriegelungsschlüssel (1) für den Zugang zu einem Kraftfahrzeug, der enthält:
- eine Kommunikationsschnittstelle (112), die konfiguriert ist, gemäß einem NFC-Protokoll zu kommunizieren;
- einen Träger, der Leistungslieferrechte bildende Daten enthält;
- eine Steuerschaltung (111), die eine Transaktion mittels der Kommunikationsschnittstelle (112) auf der Basis der die Leistungslieferrechte bildenden Daten verarbeiten kann;
- eine Empfangsaufnahme (106) eines Leistungslieferrechte bildende Daten entfernbarer Art (2) enthaltenden Trägers,
- eine Lese- und/oder Schreib-Schnittstelle (113) im in der Aufnahme angeordneten entfernbaren Träger, wobei die Steuerschaltung (111) konfiguriert ist, einen Datenaustausch zwischen der Kommunikationsschnittstelle und der Lese-/Schreib-Schnittstelle zu erlauben,
- eine die Steuerschaltung (111) aufnehmende Schale (100), wobei die Aufnahme (106) in der Schale ausgespart ist,
**dadurch gekennzeichnet, dass** ein dichtes Gehäuse (152) im Inneren der Schale (100) ausgespart ist, wobei das dichte Gehäuse (152) die Steuerschaltung aufnimmt.

2. Entriegelungsschlüssel nach Anspruch 1, wobei die Aufnahme von einem die Steuerschaltung enthaltenden Gehäuseteil getrennt ist, wobei die Schale einen entfernbaren Deckel enthält, der konfiguriert ist, selektiv einen Zugang zur Aufnahme zu liefern oder die Aufnahme von der Außenumgebung zu isolieren.

3. Entriegelungsschlüssel nach einem der vorhergehenden Ansprüche, wobei ein Behälter (108), der konfiguriert ist, eine Batterie zu empfangen, in der Aufnahme ausgespart ist, wobei der Schlüssel zwei elektrische Kontaktklötze (125, 126) enthält, die konfiguriert sind, mit zwei Polen einer im Behälter angeordneten Batterie in Kontakt zu kommen, wobei die Klötze elektrisch mit der Steuerschaltung verbunden sind.

4. Entriegelungsschlüssel nach einem der vorhergehenden Ansprüche, wobei die Aufnahme in einem bezüglich der Schale (100) gleitend montierten Einschub ausgespart ist, um die Aufnahme selektiv außerhalb der Schale anordnen zu können.

5. Entriegelungsschlüssel nach einem der vorhergehenden Ansprüche, wobei die Lese-/Schreib-Schnittstelle in die Aufnahme vorstehende Kontaktklötze enthält, wobei diese Schnittstelle eine elektrische Verbindung aufweist, die die Kontaktklötze an die Steuerschaltung anschließt.

6. Entriegelungsschlüssel nach einem der vorhergehenden Ansprüche, wobei die Aufnahme mindestens eine Führungsschiene (105, 131, 132) enthält, die konfiguriert ist, einen entfernbaren Träger gleitend im Inneren der Aufnahme zu führen.

7. Entriegelungsschlüssel nach einem der vorhergehenden Ansprüche, **dadurch gekennzeichnet, dass** der entfernbare Träger (2) eine Karte mit Mikroprozessor ist.

8. Entriegelungsschlüssel nach dem vorhergehenden Anspruch, **dadurch gekennzeichnet, dass** der entfernbare Träger (2) eine Karte mit Mikroprozessor im Format einer SIM-Karte ist.

9. Entriegelungsschlüssel nach einem der vorhergehenden Ansprüche, **dadurch gekennzeichnet, dass** die Aufnahme des entfernbaren Trägers einen Empfangsschlitz für eine Zahlungskate im Visitenkartenformat enthält.

## Claims

1. Unlocking key (1) for accessing a motor vehicle, comprising:
- a communication interface (112) configured to communicate according to an NFC protocol;
- a medium containing data constituting service provision rights;
- a control circuit (111) suitable for processing a transaction via said communication interface (112) on the basis of said data constituting service provision rights;
- a housing (106) to receive a medium containing data constituting service provision rights of a removable type (2),
- a read and/or write interface (113) in the removable medium placed in the housing, the control circuit (111) being configured to allow an exchange of data between the communication interface and the read/write interface,
- a casing (100) housing the control circuit (111), in which casing said housing (106) is disposed,
**characterized in that** a sealed enclosure (152) is disposed inside the casing (100), said sealed enclosure (152) containing the control circuit.

2. Unlocking key according to Claim 1, in which the housing is separated from an enclosure part containing the control circuit, the casing comprising a removable case configured to selectively provide access to said housing or to isolate said housing from the outside.

3. Unlocking key according to any one of the preceding claims, in which a receptacle (108) configured to receive a battery is disposed in said housing, the key comprising two electrical contact studs (125, 126) configured to come into contact with two poles of a battery disposed in the receptacle, said studs being electrically connected to said control circuit.

4. Unlocking key according to any one of the preceding claims, in which the housing is disposed in a drawer mounted in a sliding manner in relation to the casing (100), in such a way as to be able to selectively place the housing outside the casing.

5. Unlocking key according to any one of the preceding claims, in which the read/write interface has contact studs projecting into the housing, this interface having an electrical connection connecting the contact studs to the control circuit.

6. Unlocking key according to any one of the preceding claims, in which said housing comprises at least one guide rail (105, 131, 132) configured to guide a removable medium in a sliding manner inside the housing.

7. Unlocking key according to any one of the preceding claims, **characterized in that** the removable medium (2) is a microprocessor card.

8. Unlocking key according to the preceding claim, **characterized in that** the removable medium (2) is a microprocessor card in SIM card format.

9. Unlocking key according to any one of the preceding claims, **characterized in that** the housing of the removable medium comprises a slot to receive a payment card in calling card format.
